# EUROPÄISCHE PATENTSCHRIFT

(11) **EP 3 721 645 B1**
(45) Veröffentlichungstag und Bekanntmachung des Hinweises auf die Patenterteilung: **27.07.2022**
(21) Anmeldenummer: 18803921.8
(22) Anmeldetag: 12.11.2018
(51) Int. Cl.: H04L 67/12, H04W 4/38, B60L 53/65, G07C 5/00, H04W 4/44, H04W 12/06

(54) **VERFAHREN UND SYSTEM ZUM BESTÄTIGEN DER IDENTITÄT EINES FAHRZEUGS**
METHOD AND SYSTEM FOR CONFIRMING THE IDENTITY OF A VEHICLE
PROCÉDÉ ET SYSTÈME DE CONFIRMATION DE L'IDENTITÉ D'UN VÉHICULE

(30) Priorität: 07.12.2017 DE 102017222129
(43) Veröffentlichungstag der Anmeldung: 14.10.2020
(73) Patentinhaber: Robert Bosch GmbH, 70442 Stuttgart (DE)
(72) Erfinder: KLEUKER, Ulf, 70839 Gerlingen (DE); BARCIN, Buelent, 73230 Kirchheim / Jesingen (DE); KUEMMEL, Eberhard, 71573 Allmersbach (DE); LUIK, Jochen, 73207 Plochingen (DE); TREIBER, Klaus, 72654 Neckartenzlingen (DE); DOERR, Alfons, 70597 Stuttgart (DE); SCHULZE, Sebastian, 73262 Reichenbach (DE)
(86) Internationale Anmeldenummer: PCT/EP2018/080929
(87) Internationale Veröffentlichungsnummer: WO 2019/110247

(56) Entgegenhaltungen:
- DE-A1-102015 224 887
- US-A1- 2016 330 204
- US-B1- 10 318 963

## Beschreibung

Die Erfindung betrifft ein Verfahren und ein System zum Bestätigen der Identität eines Fahrzeugs.

### Stand der Technik

Für eine Vielzahl von Service-Anwendungen im Automobilbereich ist es erforderlich oder zumindest wünschenswert, das betroffene Fahrzeug zu identifizieren und die Identität des Fahrzeugs zu bestätigen.

Dies erfordert bisher eine Interaktion mit dem Fahrer des Fahrzeugs, beispielsweise durch RFID-Transponder und/oder die Eingabe eines geheimen Codes (PIN-Code). Dies ist aufwendig und fehleranfällig.

In dem Dokument DE 10 2015 224 887 A1 ist ein Verfahren zur Freigabe einer externen Zugangskontrollvorrichtung für ein Fahrzeug gezeigt, wobei durch die externe Zugangskontollvorrichtung ein Signal einer Schlüsselsuche eines Fahrzeugs empfangen wird.

Das Dokument US 2016/0330204 zeigt eine Methode um mindestens eine Kontrollfunktion in einem Fahrzeug zu aktivieren.

Es ist daher eine Aufgabe der Erfindung, die Identifikation eines Fahrzeugs und die Bestätigung der Identität des Fahrzeugs zu verbessern.

### Offenbarung der Erfindung:

Gemäß einem Aspekt der vorliegenden Offenbarung wird ein Verfahren und ein System bereitgestellt, wie sie in den unabhängigen Ansprüchen definiert sind.

Andere Aspekte der vorliegenden Offenbarung sind in den abhängigen Ansprüchen definiert.

Im Folgenden werden Ausführungsbeispiele der Erfindung unter Bezugnahme auf die beigefügten Figuren beschrieben.

### Kurze Beschreibung der Figuren

Figur 1 zeigt eine schematische Darstellung eines Systems zum Bestätigen der Identität eines Fahrzeugs gemäß einem ersten Ausführungsbeispiel der Erfindung.
Figur 2 zeigt eine schematische Darstellung eines Systems zum Bestätigen der Identität eines Fahrzeugs gemäß einem zweiten Ausführungsbeispiel der Erfindung.
Figur 3 zeigt eine schematische Darstellung eines Systems zum Bestätigen der Identität eines Fahrzeugs gemäß einem dritten Ausführungsbeispiel der Erfindung.

### Figurenbeschreibung

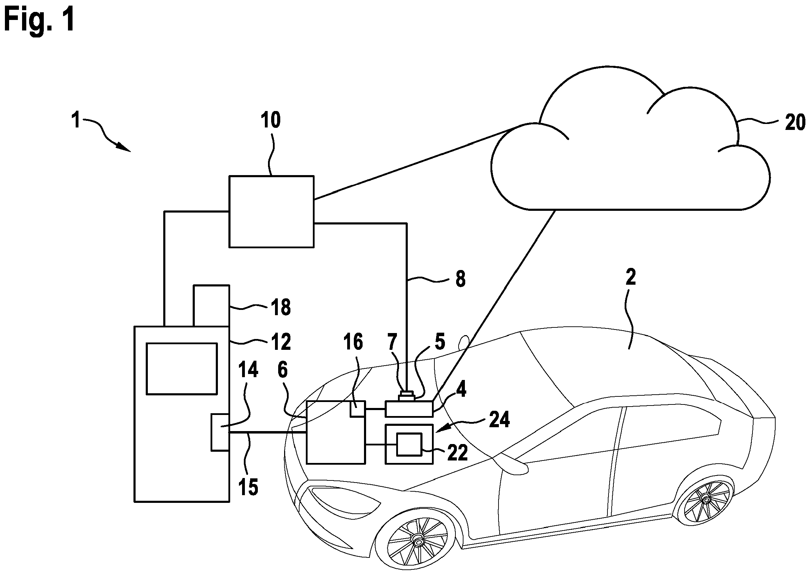

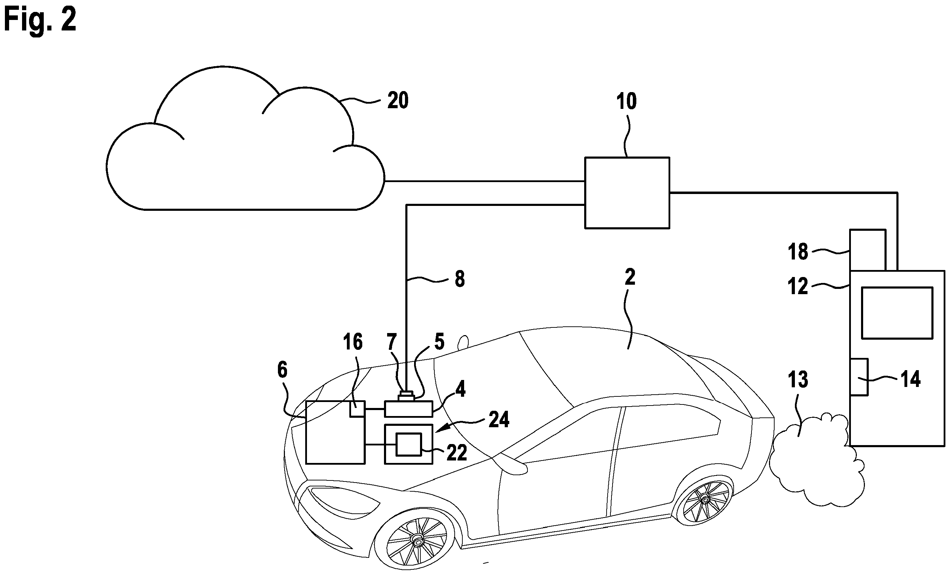

Die Figuren 1 und 2 zeigen in einer schematischen Darstellung jeweils ein System 1 zum Bestätigen der Identität eines Fahrzeugs 2 gemäß einem Ausführungsbeispiel der Erfindung.

Das System 1 umfasst eine in dem zu identifizierenden Fahrzeug verbaute Fahrzeug-Steuervorrichtung 4 sowie eine Fahrzeug-Identifikationsvorrichtung 10.

Die Fahrzeug-Steuervorrichtung 4 und die Fahrzeug-Identifikationsvorrichtung 10 sind über eine Datenverbindung 8 miteinander verbunden. Die Datenverbindung 8 kann eine drahtgebundene Datenverbindung 8 oder eine drahtlose Datenverbindung 8 sein. Die Datenverbindung 8 kann beispielsweise über eine mobile Sende- und Empfangsvorrichtung (Dongle) 7 hergestellt werden, die in eine OBD-Buchse 5 des Fahrzeugs 2 eingesteckt wird. Alternativ kann die Sende- und Empfangsvorrichtung 7 zum Aufbau der Datenverbindung 8 fest in die Fahrzeug-Steuervorrichtung 6 integriert sein.

Das System 1 umfasst darüber hinaus eine externe Service-Vorrichtung 12, die zur physikalischen Wechselwirkung 15 mit dem Fahrzeug 2 ausgebildet ist. Die externe Service-Vorrichtung 12 ist eine Strom-Ladesäule 12 zum Laden eines in dem als Elektrofahrzeug ausgebildeten Fahrzeug 2 verbauten Akkumulators 6 oder eine Kraftstoff-Zapfsäule 12 zum Betanken eines im Fahrzeug 2 verbauten Kraftstofftank 6 sein (siehe Figur 1). Die Service- Vorrichtung 12 kann auch ein Abgasmessgerät 12 zum Messen der Abgase 13 des Fahrzeugs 2 sein (siehe Figur 2).

An oder in der externen Service-Vorrichtung 12 ist ein externer Sensor 14 vorhanden, der ausgebildet ist, die physikalische Wechselwirkung 15 zwischen der externen Service-Vorrichtung 12 und dem Fahrzeug 2, beispielsweise den von einer Ladesäule 12 an einen Akkumulator 6 im Fahrzeug 2 fließenden elektrischen Strom, den von einer Zapfsäule 12 in einen Kraftstofftank 6 fließenden Kraftstoff oder von dem Fahrzeug 2 abgegebene Abgase 13, zu messen.

Im Fahrzeug 2 ist ein Fahrzeug-Sensor 16 verbaut, der ebenfalls ausgebildet ist, die physikalische Wechselwirkung 15 zwischen der externen Service-Vorrichtung 12 und dem Fahrzeug 2, beispielsweise den von einer Ladesäule 12 an einen Akkumulator 6 fließenden elektrischen Strom, den von einer Zapfsäule 12 in einen Kraftstofftank 6 fließenden Kraftstoff oder von dem Fahrzeug 2 abgegebene Abgase 13, zu messen.

Um die Identität des Fahrzeugs 2 zu bestätigen, baut die Fahrzeug-Identifikationsvorrichtung 10 die Datenverbindung 8 mit der Fahrzeug-Steuervorrichtung 4 auf. Nachdem die Datenverbindung 8 aufgebaut worden ist, wird von der Fahrzeug-Identifikationsvorrichtung 10 über die Datenverbindung 8 eine physikalische Wechselwirkung 15, nämlich ein Tank- oder Ladevorgang, zwischen dem Fahrzeug 2 und der externen Service-Vorrichtung 12 ausgelöst. Die physikalische Wechselwirkung 15 kann auch umfassen, einen Motor des Fahrzeugs 2 mit einer vorgegebenen Drehzahl zu betreiben.

Auch der Fahrzeug-Sensor 16 detektiert die physikalische Wechselwirkung 15, nämlich den an das Fahrzeug 2 übertragenen Strom, die in den Kraftstofftank 6 des Fahrzeugs 2 fließende Kraftstoffmenge oder die von dem Motor des Fahrzeugs 2 abgegebenen Abgase 13, und die Fahrzeug-Steuervorrichtung 4 überträgt über die Datenverbindung 8 einen auf diese Weise bestimmten Fahrzeug-Detektionswert an die Fahrzeug-Identifikationsvorrichtung 10.

Auch der externe Sensor 14 detektiert die physikalische Wechselwirkung 15, und die externe Service-Vorrichtung 12 überträgt einen auf diese Weise bestimmten externen Detektionswert an die Fahrzeug-Identifikationsvorrichtung 10.

Die Fahrzeug-Identifikationsvorrichtung 10 vergleicht den Fahrzeug-Detektionswert mit dem externen Detektionswert und bestätigt die Identität des Fahrzeugs 2, wenn die beiden Detektionswerte im Rahmen einer vorgegebenen Toleranz miteinander übereinstimmen.

Die Fahrzeug-Steuervorrichtung 4 und/oder die Fahrzeug-Identifikationsvorrichtung 10 können zusätzlich in Verbindung mit einer Datenbank / Cloud 20 stehen, die Informationen über das Fahrzeug 2 enthält.

Die Datenbank / Cloud 20 kann beispielsweise Identifikationsdaten und/oder Schlüssel enthalten, die es der Fahrzeug-Identifikationsvorrichtung 10 ermöglichen, das Fahrzeug 2 und/oder die Fahrzeug-Steuervorrichtung 4 zu identifizieren und/oder über eine verschlüsselte Datenverbindung 8 mit der Fahrzeug-Steuervorrichtung 4 zu kommunizieren.

Die Datenbank / Cloud 20 kann darüber hinaus ausgebildet sein, den von der Service-Vorrichtung 12 erbrachten Service, z.B. den von der Service-Vorrichtung 12 an das Fahrzeug 2 gelieferten Strom oder Kraftstoff, zu dokumentieren und/oder abzurechnen.

Die Datenbank / Cloud 20 kann auch Informationen über die Standorte von Service-Vorrichtungen 12 enthalten, um des der Fahrzeug-Steuervorrichtung 4 zu ermöglichen, die Datenverbindung 8 mit der nächstgelegen Service- Vorrichtung 12 aufzubauen.

In einem Ausführungsbeispiel , nicht durch die vorliegende Erfindung abgedeckt, weist die Service-Vorrichtung 12 zusätzlich eine Kamera 18 auf, die es ermöglicht, wenigstens ein Bild des Fahrzeugs 2 aufzunehmen, wenn es sich in der Umgebung der Service-Vorrichtung 12 befindet, und die Bilddaten an die Fahrzeug-Identifikationsvorrichtung 10 zu übertragen. Die Fahrzeug-Identifikationsvorrichtung 10 kann die von der Kamera 18 gelieferten Bilddaten zusammen mit den von dem externen Sensor 14 gemessenen Daten zu Dokumentationszwecken speichern und/oder den Besitzer des Fahrzeugs 2, z.B. über sein Smartphone, auffordern, sein Fahrzeug 2 anhand eines von der Kamera 18 aufgenommen und dem Besitzer des Fahrzeugs 2 präsentierten Bildes des Fahrzeugs 2 zu identifizieren und die geplante physikalische Wechselwirkung 15, z.B. den Lade-, Tank, oder Abgasmessvorgang, zu autorisieren.

Das Auslösen der physikalischen Wechselwirkung 15 zwischen dem Fahrzeug 2 und der Service-Vorrichtung 12 erfolgt direkt durch die Fahrzeug-Steuervorrichtung 6 , wie es zuvor beschrieben worden ist.

In einem alternativen Ausführungsbeispiel können die Fahrzeug-Identifikationsvorrichtung 10 und/oder die Fahrzeug-Steuervorrichtung 6 auf wenigstens einen Sensor 22 eines im Fahrzeug 2 verbauten Fahrerassistenzsystems 24 einwirken, um das Fahrerassistenzsystem 24 zu veranlassen, die gewünschte physikalische Wechselwirkung 15 auszulösen.

Darüber hinaus können parallel zu dem ausgelösten Service für die Diagnose Lastwechsel ins Fahrzeug 2 ausgelöst werden. Des Weiteren können über die Datenverbindung 8 weitere off-board und on-board Diagnoseprozesse gestartet und variiert und in der Datenbank/Cloud 20 umfassend mit anderen Daten abgeglichen, klassifiziert und im Detail ausgewertet werden. Es können auch weitere Dienstleistungen wie z.B. das Auslesen von Datenloggern im Fahrzeug 2 oder das Flashen der Software der Fahrzeug-Steuervorrichtung 6 angeboten werden.

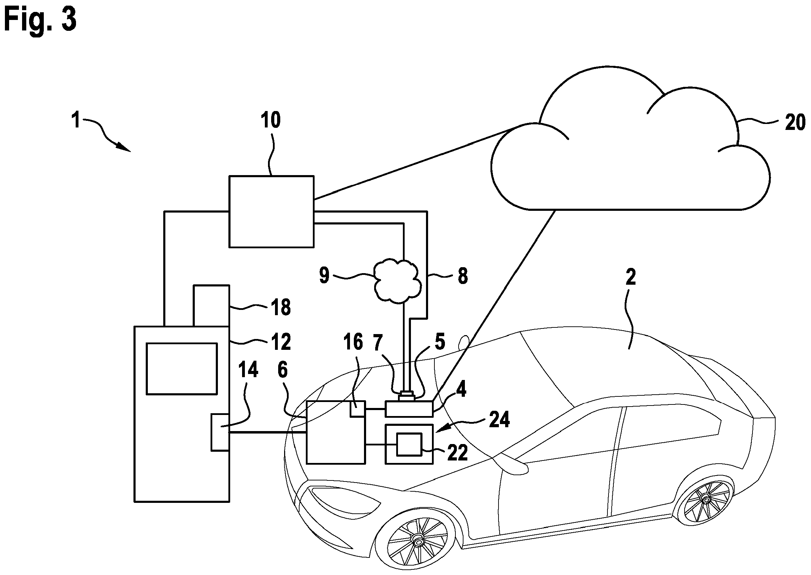

Figur 3 zeigt ein weiteres Ausführungsbeispiel eines Systems zum Bestätigen der Identität eines Fahrzeugs. Diejenigen Merkmale, die mit den in den Figuren 1 und 2 gezeigten Ausführungsbeispielen übereinstimmenden, sind mit den gleichen Bezugszeichen versehen und werden nicht erneut im Detail beschrieben.

In dem in der Figur 3 gezeigten Ausführungsbeispiel erfolgt die Rückmeldung der Fahrzeug-Steuervorrichtung 6 an die Fahrzeug-Identifikationsvorrichtung 10, d.h. die Übertragung der von dem Fahrzeug-Sensor 16 gemessenen Daten, nicht über die zuvor beschriebene direkte Datenverbindung 8 zwischen der Fahrzeug-Steuervorrichtung 4 und der Fahrzeug-Identifikationsvorrichtung 10, sondern über eine Cloud 9, insbesondere eine Cloud 9 des Fahrzeugherstellers. Die Verwendung einer Cloud 9, insbesondere einer Cloud 9 des Fahrzeugherstellers, erhöhte die Sicherheit des Verfahrens, da die Identität des Fahrzeugs 2 und/oder die Identität der Fahrzeug-Identifikationsvorrichtung 10 durch den Fahrzeughersteller überprüft und bestätigt werden kann.

## Patentansprüche

1. Verfahren zum Bestätigen der Identität eines Fahrzeugs (2), wobei das Verfahren umfasst:
Aufbauen einer Datenverbindung (8) zu einer in dem zu identifizierenden Fahrzeug (2) verbauten Fahrzeug-Steuervorrichtung (4);
Auslösen einer physikalischen Wechselwirkung (15) zwischen dem Fahrzeug (2) und einer externen Service-Vorrichtung (12);
Detektieren der physikalischen Wechselwirkung (15) durch einen im Fahrzeug (2) verbauten Fahrzeug-Sensor (16) und Bereitstellen eines korrespondierenden Fahrzeug-Detektionswertes;
Detektieren der physikalischen Wechselwirkung (15) durch einen externen Sensor (14) und Bereitstellen eines korrespondierenden externen Detektionswertes;
Vergleichen des Fahrzeug-Detektionswertes mit dem externen Detektionswert;
Bestätigen der Identität des Fahrzeugs (2), wenn der Fahrzeug-Detektionswert im Rahmen einer vorgegebenen Toleranz mit dem externen Detektionswert übereinstimmt,
**dadurch gekennzeichnet, dass** die physikalische Wechselwirkung (15) ein elektrischer Ladestrom (15) zwischen einer elektrischen Ladestelle (12) und dem Fahrzeug (2) oder ein Kraftstofffluss (15) von einer Kraftstoff-Zapfsäule (12) in das Fahrzeug (2) ist.

2. Verfahren nach Anspruch 1, wobei das Bereitstellen des Fahrzeug-Detektionswertes über eine virtuelle Cloud (9), insbesondere eine virtuelle Cloud (9) eines Fahrzeugherstellers, erfolgt.

3. Verfahren nach Anspruch 1 oder 2, wobei die physikalische Wechselwirkung (15) durch Einwirken auf Sensoren (22) eines im Fahrzeug (2) verbauten Fahrerassistenzsystems (24) ausgelöst wird.

4. System zum Bestätigen der Identität eines Fahrzeugs (2), wobei das System umfasst:
eine in dem zu identifizierenden Fahrzeug (2) verbaute Fahrzeug-Steuervorrichtung (4);
eine Fahrzeug-Identifikationsvorrichtung (10);
eine externe Service-Vorrichtung (12), die zur physikalischen Wechselwirkung (15) mit dem Fahrzeug (2) ausgebildet ist;
einen im Fahrzeug (2) verbauten Fahrzeug-Sensor (16); und
einen externen Sensor (14);
wobei die Fahrzeug-Identifikationsvorrichtung (10) ausgebildet ist, eine Datenverbindung (8) mit der Fahrzeug-Steuervorrichtung (4) aufzubauen und eine physikalische Wechselwirkung (15) zwischen der Fahrzeug-Steuervorrichtung (4) und der externen Service-Vorrichtung (12) auszulösen;
wobei der Fahrzeug-Sensor (16) ausgebildet ist, die physikalische Wechselwirkung (15) zu detektieren und einen korrespondierenden Fahrzeug-Detektionswert an die Fahrzeug-Identifikationsvorrichtung (10) zu übertragen;
wobei der externe Sensor (14) ausgebildet ist, die physikalische Wechselwirkung (15) zu detektieren und einen korrespondierenden externen Detektionswert an die Fahrzeug-Identifikationsvorrichtung (10) zu übertragen; und
wobei die Fahrzeug-Identifikationsvorrichtung (10) ausgebildet ist, den Fahrzeug-Detektionswert und den externen Detektionswert miteinander zu vergleichen und die Identität des Fahrzeugs (2) zur bestätigen, wenn die beiden Detektionswerte im Rahmen einer vorgegebenen Toleranz miteinander übereinstimmen,
**dadurch gekennzeichnet, dass** die externe Servicevorrichtung (12) eine elektrische Ladestelle (12) oder eine Kraftstoff-Zapfsäule (12) ist und wobei im Fall der elektrischen Ladestelle (12) die physikalische Wechselwirkung (15) ein elektrischer Ladestrom (15) zwischen der Ladestelle und dem Fahrzeug (2) ist und im Fall der Kraftstoff-Zapfsäule (12) die physikalische Wechselwirkung (15) ein Kraftstofffluss (15) von der Kraftstoff-Zapfsäule (12) in das Fahrzeug (2) ist.

5. System nach Anspruch 4, wobei die Datenverbindung (8) eine Funkverbindung und/oder eine verschlüsselte Verbindung ist.

6. System nach einem der Ansprüche 4 bis 5, wobei die Fahrzeug-Identifikationsvorrichtung (10) Zugriff auf eine Datenbank (20) hat, die Fahrzeug-Informationen enthält.

7. System nach einem der Ansprüche 4 bis 6, wobei die Datenbank (20) Teil einer virtuellen Cloud ist.

## Claims

1. Method for confirming the identity of a vehicle (2), the method comprising:
setting up a data connection (8) to a vehicle control apparatus (4) installed in the vehicle (2) to be identified;
triggering a physical interaction (15) between the vehicle (2) and an external service apparatus (12);
detecting the physical interaction (15) by way of a vehicle sensor (16) installed in the vehicle (2) and providing a corresponding vehicle detection value;
detecting the physical interaction (15) by way of an external sensor (14) and providing a corresponding external detection value;
comparing the vehicle detection value with the external detection value;
confirming the identity of the vehicle (2) if the vehicle detection value matches the external detection value within the bounds of a predefined tolerance,
**characterized in that** the physical interaction (15) is an electrical charging current (15) between an electrical charging station (12) and the vehicle (2) or a flow of fuel (15) from a fuel pump (12) to the vehicle (2).

2. Method according to Claim 1, wherein the vehicle detection value is provided via a virtual cloud (9), in particular a virtual cloud (9) of a vehicle manufacturer.

3. Method according to Claim 1 or 2, wherein the physical interaction (15) is triggered by influencing sensors (22) of a driver assistance system (24) installed in the vehicle (2).

4. System for confirming the identity of a vehicle (2), the system comprising:
a vehicle control apparatus (4) installed in the vehicle (2) to be identified;
a vehicle identification apparatus (10);
an external service apparatus (12) designed for physical interaction (15) with the vehicle (2);
a vehicle sensor (16) installed in the vehicle (2); and
an external sensor (14);
wherein the vehicle identification apparatus (10) is designed to set up a data connection (8) to the vehicle control apparatus (4) and to trigger a physical interaction (15) between the vehicle control apparatus (4) and the external service apparatus (12);
wherein the vehicle sensor (16) is designed to detect the physical interaction (15) and to transmit a corresponding vehicle detection value to the vehicle identification apparatus (10);
wherein the external sensor (14) is designed to detect the physical interaction (15) and to transmit a corresponding external detection value to the vehicle identification apparatus (10); and
wherein the vehicle identification apparatus (10) is designed to compare the vehicle detection value and the external detection value and to confirm the identity of the vehicle (2) if the two detection values match within the bounds of a predefined tolerance,
**characterized in that** the external service apparatus (12) is an electrical charging station (12) or a fuel pump (12) and wherein, in the case of the electrical charging station (12), the physical interaction (15) is an electrical charging current (15) between the charging station and the vehicle (2) and, in case of the fuel pump (12), the physical interaction (15) is a flow of fuel (15) from the fuel pump (12) to the vehicle (2).

5. System according to Claim 4, wherein the data connection (8) is a radio connection and/or an encrypted connection.

6. System according to either of Claims 4 and 5, wherein the vehicle identification apparatus (10) has access to a database (20) that contains vehicle information.

7. System according to one of Claims 4 to 6, wherein the database (20) is part of a virtual cloud.

## Revendications

1. Procédé de confirmation de l'identité d'un véhicule (2), le procédé comprenant les étapes suivantes :
établir une liaison de données (8) avec un dispositif de commande de véhicule (4) installé dans le véhicule (2) à identifier ;
déclencher une interaction physique (15) entre le véhicule (2) et un dispositif de service extérieur (12) ;
détecter l'interaction physique (15) par le biais d'un capteur de véhicule (16) installé dans le véhicule (2) et fournir une valeur de détection de véhicule correspondante ;
détecter l'interaction physique (15) par le biais d'un capteur extérieur (14) et fournir une valeur de détection extérieure correspondante ;
comparer la valeur de détection de véhicule à la valeur de détection extérieure ;
confirmer l'identité du véhicule (2) lorsque la valeur de détection de véhicule coïncide avec la valeur de détection extérieure dans une tolérance spécifiée,
**caractérisé en ce que** l'interaction physique (15) est un courant de charge électrique (15) entre un point de charge électrique (12) et le véhicule (2) ou un flux de carburant (15) d'un distributeur de carburant (12) dans le véhicule (2).

2. Procédé selon la revendication 1, la valeur de détection de véhicule étant fournie par le biais d'un Cloud virtuel (9), notamment d'un Cloud virtuel (9) d'un constructeur automobile.

3. Procédé selon la revendication 1 ou 2, l'interaction physique (15) étant déclenchée par l'action sur des capteurs (22) d'un système d'aide à la conduite (24) installé dans le véhicule (2).

4. Système de confirmation d'identité d'un véhicule (2), le système comprenant :
un dispositif de commande de véhicule (4) installé dans le véhicule (2) à identifier ;
un dispositif d'identification de véhicule (10) ;
un dispositif de service extérieur (12) qui est conçu pour l'interaction physique (15) avec le véhicule (2) ;
un capteur de véhicule (16) installé dans le véhicule (2) ; et
un capteur extérieur (14) ;
le dispositif d'identification de véhicule (10) étant conçu pour établir une liaison de données (8) avec le dispositif de commande de véhicule (4) et pour déclencher une interaction physique (15) entre le dispositif de commande de véhicule (4) et le dispositif de service extérieur ( 12);
le capteur de véhicule (16) étant conçu pour détecter l'interaction physique (15) et pour transmettre une valeur de détection de véhicule correspondante au dispositif d'identification de véhicule (10) ;
le capteur extérieur (14) étant conçu pour détecter l'interaction physique (15) et pour transmettre une valeur de détection extérieure correspondante au dispositif d'identification de véhicule (10) ; et
le dispositif d'identification de véhicule (10) étant conçu pour comparer la valeur de détection de véhicule et la valeur de détection extérieure entre elles et pour confirmer l'identité du véhicule (2) lorsque les deux valeurs de détection coïncident dans une tolérance prédéterminée,
**caractérisé en ce que** le dispositif de service extérieur (12) est un point de charge électrique (12) ou un distributeur de carburant (12) et, dans le cas du point de charge électrique (12), l'interaction physique (15) est un courant de charge électrique (15) entre le point de charge et le véhicule (2) et, dans le cas du distributeur de carburant (12), l'interaction physique (15) est le débit de carburant (15) du distributeur de carburant (12) dans le véhicule (2).

5. Système selon la revendication 4, la liaison de données (8) étant une liaison radio et/ou une liaison cryptée.

6. Système selon l'une des revendications 4 et 5, le dispositif d'identification de véhicule (10) ayant accès à une base de données (20) qui contient des informations sur le véhicule.

7. Système selon l'une des revendications 4 à 6, la base de données (20) faisant partie d'un Cloud virtuel.
